# EUROPÄISCHE PATENTSCHRIFT

(11) **EP 3 615 233 B1**
(45) Veröffentlichungstag und Bekanntmachung des Hinweises auf die Patenterteilung: **25.05.2022**
(21) Anmeldenummer: 18720121.5
(22) Anmeldetag: 10.04.2018
(51) Int. Cl.: B07C 1/02, B65G 43/08

(54) **ÜBERTRAGUNGSVORRICHTUNG UND VERFAHREN ZUR ÜBERTRAGUNG VON STÜCKGÜTERN**
DEVICE AND METHOD FOR TRANSFER OF PIECE GOODS
DISPOSITIF ET PROCÉDÉ DE TRANSFERT DES ARTICLES AU DÉTAIL

(30) Priorität: 24.04.2017 EP 17000697
(43) Veröffentlichungstag der Anmeldung: 04.03.2020
(73) Patentinhaber: Siemens Aktiengesellschaft, 80333 München (DE)
(72) Erfinder: ASCHPURWIS, Carsten, 78464 Konstanz (DE); HASELBERGER, Nikolaus, 78315 Radolfzell-Markelfingen (DE); HAHN, Sebastian, 91350 Gremsdorf (DE); SCHIESS, Tim, 78467 Konstanz (DE)
(74) Vertreter: Siemens Patent Attorneys
(86) Internationale Anmeldenummer: PCT/EP2018/059134
(87) Internationale Veröffentlichungsnummer: WO 2018/197201

(56) Entgegenhaltungen:
- US-A1- 2014 081 446

## Beschreibung

Die vorliegende Erfindung betrifft eine Übertragungsvorrichtung sowie ein Verfahren zum Übertragen von Stückgütern.

US 2014/0081446 A1 offenbart ein System zur automatischen Sortierung von Briefpost nach dem Oberbegriff von Anspruch 1, welches eine Versorgungseinheit ("supply unit"), eine Briefpost Einfügeeinheit ("mailpostal matter inserting unit") und einen Quergurt-Förderer ("crossbelt carrier") umfasst.

Übertragungsvorrichtungen zum Übertragen von Stückgütern wie beispielsweise Paketen oder Werkzeugstücken auf eine Sortiereinheit sind bekannt. Dabei ergibt sich häufig das Problem, dass bereits bei mittleren Durchsätzen (z.B. 3kpph) bei heutigen Einschüssen in Sortiereinheiten Zustände auftreten, die den mittelfristigen Durchsatz deutlich unter den Nenndurchsatz eines Einschusses treiben. Bei regelmäßig auftretenden Stopps wegen fehlender freier Plätze auf der Sortiereinheit muss nicht nur der Einschuss gestoppt werden, sondern auch die gesamte zuführende Fördertechnik. Wird der Durchsatz erhöht, muss die Folge der Stückgüter pro Streckenabschnitt höher werden. Treten dann hier Stopps auf, kommt es unweigerlich zu ungünstigen Verdichtungen, die dann beim erneuten Anfahren aufgelöst werden müssen (Stau-Phänomen im Straßenverkehr). Dieser Vorgang kostet Zeit und bringt eine Phase deutlich reduzierten Durchsatzes mit sich. Erschwerend kommt hinzu, dass die verwendbaren Beschleunigungen für leichte Güter niedrig sind, wenn man unkontrolliertes Rutschen vermeiden will.

Die Aufgabe besteht darin, eine Übertragungsvorrichtung und ein Verfahren zur Übertragung mit einem verbesserten Durchsatz zu entwickeln.

Diese Aufgabe wird erfindungsgemäss durch eine Übertragungsvorrichtung nach Anspruch 1, sowie durch ein Verfahren zur Übertragung nach Anspruch 9 gelöst.

Die Übertragungsvorrichtung zur Übertragung von Stückgütern umfasst dabei eine Fördereinheit zum Fördern von Stückgütern. Ferner umfasst die Übertragungsvorrichtung eine Sortiereinheit, welche zum Einsortieren von Stückgütern aus der Fördereinheit ausgebildet ist. Ferner umfasst die Übertragungsvorrichtung eine Übertragungseinheit, welche eine Transportverbindung zwischen der Fördereinheit und der

Sortiereinheit ausbildet. Ferner umfasst die Übertragungsvorrichtung eine Ausschleusereinheit, welche auf einem Abschnitt der Fördereinheit positioniert ist und dazu ausgebildet ist, ein Stückgut nur dann auf die Übertragungseinheit auszuschleusen, wenn dieses Stückgut einen vordefinierten Mindestabstand zu einem zuvor ausgeschleusten Stückgut aufweist. Ferner umfasst die Übertragungseinheit eine Einschusseinheit, welche dazu ausgebildet ist, die Stückgüter auf einen für das Stückgut ermittelten freien Platz der Sortiereinheit zu befördern.

Die Erfindung hat den Vorteil, dass mittels der Ausschleusereinheit eine bestimmte Selektion an Stückgütern vorgenommen werden kann, die über die Übertragungseinheit zur Sortiereinheit geführt werden. Mit der konkreten Abstandsvoraussetzung kann gewährleistet werden, dass der Abstand der Stückgüter auf der Einschusseinheit selbst ein störungsfreies Abbremsen bzw. Beschleunigen ermöglicht. Dies dient als Grundlage, um einen verbesserten Durchsatz der Übertragungsvorrichtung zu erzielen. Die Einschusseinheit wird ferner dadurch entlastet, da sie diese Aufgabe nicht erfüllen muss (kein exception-handling). Als Stückgüter kommen beispielsweise Pakete, Werkzeuge, Gepäckstücke oder Ähnliches in Betracht. Eine Einschusseinheit kann dabei eine HSI (high-speed-injection) oder auch Hochgeschwindigkeitsinjektor sein, welche beispielsweise einzelne Bandzellen zur Auflage von Stückgütern umfasst. Als Sortiereinheit kommt beispielsweise ein Sorter in Betracht. Insbesondere kann dies ein Quer-Band-Sorter sein.

Die Ausschleusereinheit ist bevorzugt dazu ausgebildet, nur diejenigen Stückgüter in die Übertragungseinheit auszuschleusen, welche eine bestimmte Größe nicht überschreiten. Hiermit können zum Beispiel kleine Stückgüter für die Sortiereinheit ausselektiert werden.

Die Ausschleusereinheit kann dazu ausgebildet ein, nur dann Stückgüter auf die Übertragungseinheit auszuschleusen, wenn die Einschusseinheit dazu eine Freigabe erteilt hat. Dadurch wird ein weiterer Zufluss von Stückgütern auf die Einschusseinheit verringert. Es muss dann zunächst nur mit den bereits eingeleiteten Stückgütern umgegangen werden. Das Risiko eines Staus auf der Übertragungseinheit wird vermindert.

Die Ausschleusereinheit ist bevorzugt dazu ausgebildet, keine Stückgüter in die Übertragungseinheit auszuschleusen, wenn für ein Stückgut von der Einschusseinheit kein freier Platz auf der Sortiereinheit zugewiesen werden kann. In anderen Worten wird dann die Zufuhr gestoppt, wenn in einem zur Verfügung stehenden Zeitfenster kein freier Platz auf der Sortiereinheit angesteuert werden kann.

Die Einschusseinheit ist bevorzugt derart ausgebildet, dass ein Stückgut, für welches kein freier Platz auf der Sortiereinheit zugewiesen werden kann, auf einer definierten Halteposition auf der Einschusseinheit vor der Sortiereinheit positioniert wird. Dadurch können temporäre Einlagerungen von Stückgütern auf der Einschusseinheit erfolgen. Dabei wird dann entsprechend der Zufluss auf die Übertragungseinheit verringert, so dass es nicht zu einer Überlastung der Übertragungseinheit kommt.

Die Einschusseinheit kann derart ausgebildet sein, dass ein auf der Einschusseinheit positioniertes Stückgut mittels der Einschusseinheit bei Erreichbarkeit eines freien Platzes auf diesen befördert wird. Die Einlagerung erfolgt also nur so lange, bis wieder ein freier Platz von der Einschusseinheit zugewiesen werden kann. Dadurch wird eine Optimierung erzielt.

Die Einschusseinheit kann eine Messeinrichtung umfassen, welche dazu ausgebildet ist, die Größe und Position des Stückguts bei sich verändernden Geschwindigkeiten zu vermessen. In anderen Worten können die Stückgüter dynamisch vermessen werden. Eine solche Messeinrichtung kann ein Messlichtgitter sein. Das bedeutet, dass bei verschiedenen oder sich verändernden Messgeschwindigkeiten dennoch Form und Position bestimmt werden können. Wenn beispielsweise das System abgebremst wird, können dann weiterhin die entsprechenden Formate der Stückgüter ermittelt werden, wobei beispielsweise darauf basierend ein freier Platz auf der Sortiereinheit ermittelt werden kann.

Die Übertragungseinheit kann mit der Sortiereinheit einen Winkel von weniger als 70°, bevorzugt weniger als 55°, noch bevorzugter weniger als 40° aufweisen. Dadurch können die Geschwindigkeiten der Stückgüter auf die Geschwindigkeit der Sortiereinheit geeignet abgestimmt werden.

Ferner wird ein Verfahren zur Übertragung von Stückgütern vorgeschlagen, umfassend die Schritte: Bereitstellen einer Fördereinheit zum Fördern von Stückgütern. Dann erfolgt das Bereitstellen einer Sortiereinheit, welche zum Einsortieren von Stückgütern aus der Fördereinheit ausgebildet ist. Daraufhin erfolgt das Bereitstellen einer Übertragungseinheit, welche eine Transportverbindung zwischen der Fördereinheit und der Sortiereinheit ausbildet. Dann erfolgt das Bereitstellen einer Einschusseinheit, welche dazu ausgebildet ist, die Stückgüter auf einen für das Stückgut ermittelten freien Platz der Sortiereinheit zu befördern. Dann erfolgt das Fördern von Stückgütern entlang der Fördereinheit. Daraufhin erfolgt das Ausschleusen von ausgewählten Stückgütern mittels einer Ausschleusereinheit in die Übertragungseinheit, welche auf einem Abschnitt der Fördereinheit positioniert ist und dazu ausgebildet ist, ein Stückgut nur dann auf die Übertragungseinheit auszuschleusen, wenn dieses Stückgut einen vordefinierten Mindestabstand zu einem zuvor ausgeschleusten Stückgut aufweist. Ermitteln eines freien Platzes für ein ausgeschleustes Stückgut auf der Sortiereinheit und Befördern des Stückguts mittels der Einschusseinheit auf den ermittelten freien Platz.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
Figur 1 eine Übertragungsvorrichtung nach einer bevorzugten Ausführungsvariante;
Figur 2 ein Programmablaufplan einer Ausschleusereinheit nach einer beispielhaften Ausführungsform; und
Figur 3 ein Programmablaufplan einer Einschusseinheit nach einer beispielhaften Ausführungsform.

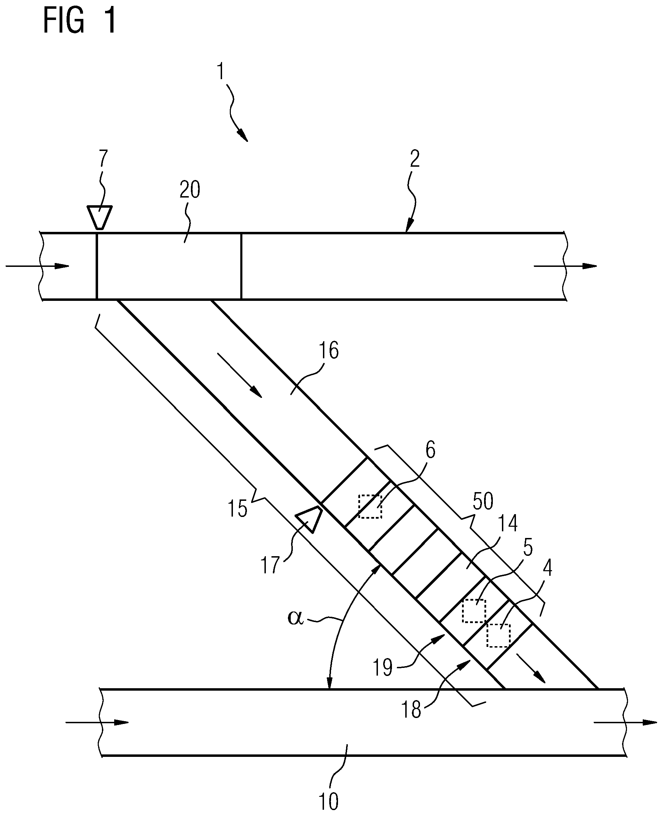

In der Figur 1 ist eine erfindungsgemäße Übertragungsvorrichtung 1 gezeigt. Die Übertragungsvorrichtung 1 umfasst dabei eine Fördereinheit 2, welche zum Fördern von Stückgütern ausgebildet ist. Diese Stückgüter 4, 5, 6 werden beispielsweise von der Fördereinheit 2 mit einer bestimmten ersten Fördergeschwindigkeit transportiert. Diese Fördereinheit 2 ist beispielsweise eine Fördertechnik-Hauptlinie, bei der zum Beispiel eine Vielzahl verschiedenartiger Stückgüter 4, 5, 6 gefördert wird. Stückgüter 4, 5, 6 werden auf dieser Fördereinheit 2 beispielhaft in Pfeilrichtung befördert. Ferner umfasst die Übertragungsvorrichtung 1 eine Sortiereinheit 10.

In diese Sortiereinheit 10 sollen entsprechende Stückgüter 4, 5, 6 aus der Fördereinheit 2 einsortiert werden. Die Sortiereinheit 10 weist beispielsweise eine zweite Fördergeschwindigkeit auf, wobei der Transport ebenfalls rein beispielhaft in eine Pfeilrichtung erfolgt. Dazu stellt die Sortiereinheit 10 eine Vielzahl Plätze zur Verfügung. Beispielsweise können solche freien Plätze durch Schalen ausgebildet werden, wobei die Erfindung nicht darauf beschränkt ist. Eine Sortiereinheit 10 kann beispielsweise ein Sorter sein. Im speziellen kann dies beispielsweise ein Quer-Band-Sorter sein, wobei die Erfindung nicht darauf beschränkt ist.

Ferner umfasst die Übertragungsvorrichtung 1 eine Übertragungseinheit 15, welche eine Transportverbindung zwischen der Fördereinheit 2 und der Sortiereinheit 10 ausbildet. Über diese Übertragungseinheit 15 können dann Stückgüter 4, 5, 6 der Sortiereinheit 10 zugeführt werden und in die zur Verfügung gestellten freien Plätze einsortiert werden.

Die Übertragungseinheit 15 umfasst dazu eine Einschusseinheit 50, welche dazu ausgebildet ist, die Stückgüter 4, 5, 6 auf einen für das Stückgut 4, 5, 6 ermittelten freien Platz auf der Sortiereinheit 10 zu befördern. Eine solche Einschusseinheit 50 kann ein sogenannte HSI (High-Speed-Injection) oder auch Hochgeschwindigkeitsinjektor sein. In anderen Worten ist eine Einschusseinheit 50 eine Eingabestation, die die einkommenden Stückgüter 4, 5, 6 auf die freien Plätze der Sortiereinheit 10 passend befördert. Die Einschusseinheit 15 besteht hier beispielsweise aus einzelnen Bändern 14 bzw. Bänderzellen, die je nach dem ermittelten freien Platz beschleunigt werden können, so dass das Stückgut 4, 5, 6 in einen freien Platz der Sortiereinheit 10 eingeschossen werden kann. Dabei wird beispielsweise auf eine Synchrongeschwindigkeit beschleunigt, die mit der zweiten Fördergeschwindigkeit der Sortiereinheit 10 zum Einlagern verträglich ist.

Auf einem Abschnitt der Fördereinheit 2 ist ferner eine Ausschleusereinheit 20 positioniert. Diese Ausschleusereinheit 20 ist dabei für das Ausschleusen von Stückgütern 4, 5, 6 auf die Übertragungseinheit 15 vorgesehen. Insbesondere kann eine Ausschleusereinheit 20 derart ausgebildet sein, dass nur Stückgüter 4, 5, 6 ausgeschleust werden, die eine bestimmte Bedingung erfüllen. Dafür weist die Ausschleusereinheit 20 ferner eine Messeinheit 7 auf. Hierbei werden von der Ausschleusereinheit 20 nur solche Stückgüter 4, 5, 6 auf die Übertragungseinheit 15 ausgeschleust, welche einen vordefinierten Mindestabstand zu einem vorherigen ausgeschleusten Stückgut 4, 5, 6 aufweisen. Mit der konkreten Abstandsvoraussetzung kann gewährleistet werden, dass durch den Abstand der Stückgüter 4, 5, 6 auf der Einschusseinheit 50 ein störungsfreies Abbremsen bzw. beschleunigen ermöglicht ist. Dies bildet einen Startpunkt für ein flexibles Handling der Stückgüter 4, 5, 6 auf der Übertragungseinheit 15 und dient als Grundlage, um einen verbesserten Durchsatz der Übertragungsvorrichtung 1 zu erzielen. Die Einschusseinheit 50 wird ferner dadurch entlastet, da sie diese Aufgabe nicht erfüllen muss.

In dieser bevorzugten Ausführungsvariante kann die Ausschleusereinheit 20 auch derart ausgebildet sein, dass nur bestimmte Größen bzw. Formate von Stückgütern 4, 5, 6 in die Übertragungseinheit 15 eingeschleust werden. Zum Beispiel können somit nur entsprechend kleine Stückgüter 4, 5, 6 in die Übertragungseinheit 15 ausgeschleust werden. Stückgüter 4, 5, 6, welche zu groß für die Sortiereinheit 10 sind, rufen dann beispielsweise in der an einer Messvorrichtung 17 keine Störung oder gegebenenfalls einen Stillstand auf der Einschusseinheit 50 hervor.

Stückgüter 4, 5, 6, welche nicht von der Ausschleusereinheit 20 in die Übertragungseinheit 15 abgezweigt werden, können einfach entlang der Fördereinheit 2 weitergefördert werden und gegebenenfalls einer entsprechenden Rezirkulation zugeführt werden.

Die Ausschleusereinheit 20 ist bevorzugt auch derart ausgebildet, dass diese nur dann Stückgüter 4, 5, 6 in die Übertragungseinheit 15 und damit zur Einschusseinheit 50 zuführt, wenn die Einschusseinheit 50 dazu eine Freigabe erteilt. Beispielsweise kann eine Freigabe dann verweigert werden, wenn für ein Stückgut 4, 5, 6 kein freier Platz in einem bestimmten Zeitfenster ermittelt werden kann, der mittels der Einschusseinheit 50 erreicht werden kann. Dadurch kann eine Überfüllung der Übertragungseinheit 15 und insbesondere der Einschusseinheit 50 verringert werden. Die Stückgüter 4, 5, 6, welche nicht eingeschleust werden, können dann einfach weiter auf der Fördereinheit 2 transportiert werden, ohne dass das Gesamtsystem gestört wird. Die Einschusseinheit 50 hat dann vorteilhaft nur weniger Stückgüter 4, 5, 6 zu verarbeiten.

Das Erkennen eines Falles, in dem kein Platz in einem bestimmten Zeitfenster gefunden wird, kann hierbei beispielhaft wie folgt funktionieren. In der konkreten Ausführungsform umfasst die Übertragungseinheit 15 weiterhin beispielhaft einen Förderabschnitt 16, der beispielsweise eine frei definierte Förderstrecke ausbildet. Es können auf diesem Förderabschnitt 16 beispielsweise mehrere Stückgüter 4, 5, 6 mit einer im Normalfall typischerweise konstanten Geschwindigkeit gefördert werden. Diese können in anderen Ausführungsformen auch auf diesem Förderabschnitt 16 getrackt werden.

Am Übergang vom Förderabschnitt 16 zur Einschusseinheit 50 befindet sich beispielhaft eine Messeinrichtung 17, insbesondere ein Messlichtgitter, welches bevorzugt dazu ausgebildet ist, Format und Lage des jeweiligen Stückguts 4, 5, 6 exakt zu vermessen. Auf Basis dieser Information wird dann beispielhaft eine Anfrage über das Timing für einen erreichbaren freien Platz für das jeweilige Stückgut 4, 5, 6 an die Einschusseinheit 50 gestellt, welche dieser einen freien Platz zuweist oder eben nicht. Im Falle, dass sich ein freier Platz gefunden hat, kann die Einschusseinheit 50 ein individuell errechnetes Beschleunigungsprofil errechnen und das Stückgut 4, 5, 6 zum freien Platz der Sortiereinheit 10 einschießen bzw. befördern.

In dieser besonderen Ausführungsform ist die Einschusseinheit 50 ferner derart ausgebildet, dass ein Stückgut 4, 5, 6, für welches keinen freien Platz in dem entsprechend zur Verfügung stehenden Zeitfenster ermittelt werden kann, auf einer definierten Halteposition 18, 19 auf der Einschusseinheit 50 vor der Sortiereinheit 10 positioniert wird. Gleichzeitig wird, wie oben beschrieben, ein Zustrom von weiteren Stückgütern 4, 5, 6 in die Übertragungseinheit 15 durch Entzug der Freigabe der Ausschleusereinheit 20 verhindert.

Ferner kann ein Abbremsen des Beförderungsabschnitts zur Entlastung der Einschusseinheit 50 erfolgen. Bevorzugt erfolgt das jedoch erst, wenn ein Stückgut 4, 5, 6, das gerade beim Ausschleusen in der Ausschleusereinheit 20 befindlich ist, erst auf die Übertragungseinheit 15 tatsächlich ausgeschleust wird. Erst dann erfolgt das Abbremsen, um Probleme an der Schnittstelle von Ausschleudereinheit und Übertragungseinheit zu vermeiden.

Bevorzugt werden während des Abbremsvorgangs die Stückgüter 4, 5, 6 ohne freien Platz auf den Haltepositionen 18, 19 eingelagert. Diese Halteposition 18, 19 auf der Einschusseinheit 50 sind dabei bevorzugt derart positioniert, dass diese sich nahe an der Sortiereinheit 10 befinden, wobei dennoch eine ausreichend lange Strecke zur Verfügung gestellt wird, so dass das eingelagerte Stückgut 4, 5, 6, wenn diesem wieder ein freier Platz zugewiesen werden kann, mittels der Einschusseinheit 50 genügend hinreichend beschleunigt bzw. synchronisiert werden kann. In der vorliegenden Figur sind beispielhaft zwei Stückgüter 5, 6 an solchen Haltepositionen 18, 19 eingelagert. Hierbei sind demnach zwei Stückgüter 4, 5, 6 nacheinander auf unterschiedlichen Halteposition 18, 19 bzw. Bandzellen der Einschusseinheit 50 positioniert.

In der Zeit des Abbremsens können beispielsweise weitere Stückgüter, hier das Stückgut 6, während des Abbremsens durch die Messeinrichtung 17, bevorzugt ein Messlichtgitter, geführt werden. Dafür ist die Messeinrichtung 17 dazu ausgebildet, das Stückgut dynamisch zu vermessen, d.h. auch bei Abbremsen bzw. bei sich verändernden Geschwindigkeiten wird Position und Gestalt des Stückguts richtig vermessen. Dazu werden beispielsweise die einzelnen Bänder in dem Bereich synchron abgebremst und haben demnach zu jeder Zeit die gleiche Geschwindigkeit.

Sobald wieder frei Plätze zur Verfügung stehen, wird bevorzugt wieder auf Normalbetrieb beschleunigt. Dann wird auch der Ausschleusereinheit 20 wieder eine Freigabe vergeben, so dass ausgewählte Stückgüter wieder über die Ausschleusereinheit 20 in die Übertragungseinheit 15 überführt werden können.

Um das Zeitfenster zum Finden eines freien Platzes auf der Sortiereinheit 10 zu vergrößern, kann die Einschusseinheit 50 nicht nur eine Messgeschwindigkeit, eine Synchrongeschwindigkeit, sondern auch eine darüber liegende Scheitelgeschwindigkeit und eine definierte Geschwindigkeit unterhalb der Messgeschwindigkeit fahren. Diese letztere Geschwindigkeit definiert den Mindestabstand für die Ausschleusung auf der Ausschleusereinheit 20. Die Scheitelgeschwindigkeit ermöglicht das Einholen eines knapp vorbeigefahrenen freien Platz auf der Sortiereinheit 10. Wird auf der konstanten Länge der Einschusseinheit 50 eine unterschiedliche Geschwindigkeit gefahren, ist das Stückgut 4, 5, 6 früher oder später bei einer konstant fahrenden Sortiereinheit 10. Durch die größere Splittung der möglichen Geschwindigkeiten, ohne die nachfolgenden Stückgüter zum Bremsen zu zwingen, kann zwischen mehreren Plätzen als im Standardfall gewählt werden.

Die Übertragungseinheit 15 schließt rein beispielhaft einen Winkel α von 30° mit der Sortiereinheit 10 ein, wobei die Erfindung nicht darauf beschränkt ist. Dadurch können die Geschwindigkeiten der Stückgüter 4, 5, 6 auf die Geschwindigkeit der Sortiereinheit 10 abgestimmt geeignet abgestimmt werden.

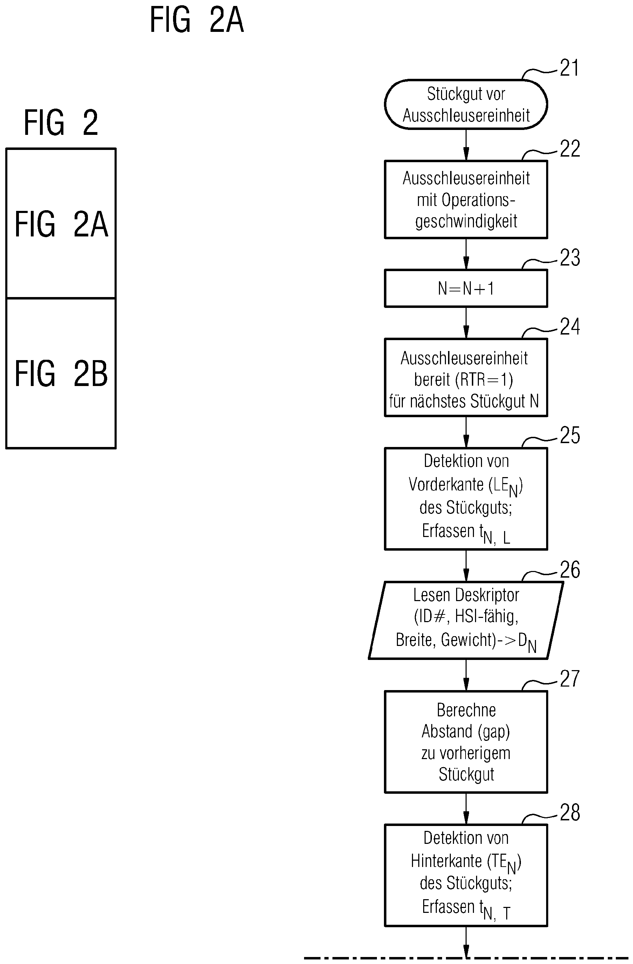

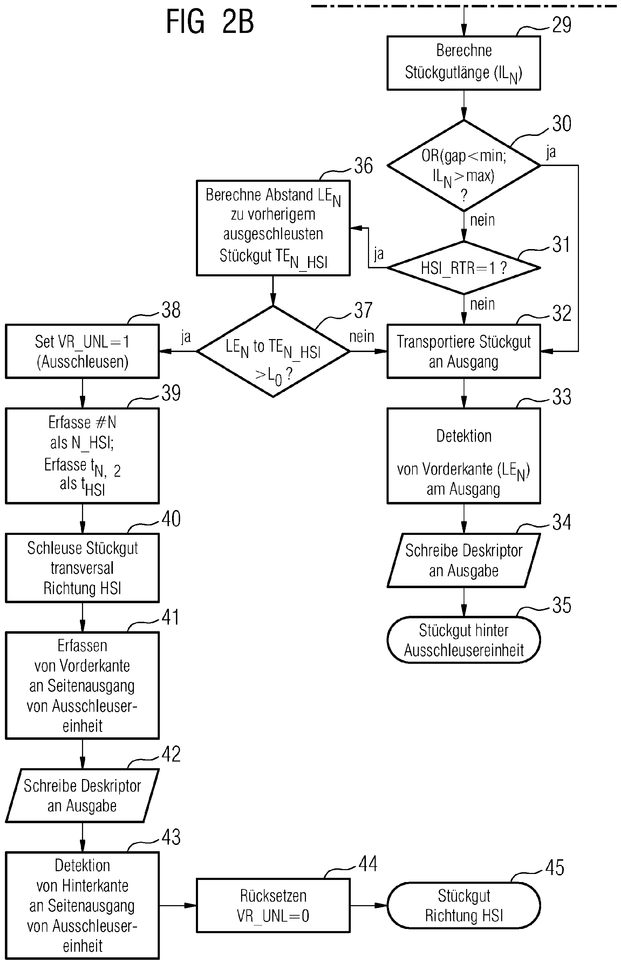

Figur 2 zeigt einen sehr detaillierten Programmablaufplan einer Ausschleusereinheit 20 nach einer beispielhaften Ausführungsform. Viele der einzelnen Prozessschritte sind dabei rein beispielhaft dargestellt.

In einem beispielhaften ersten Prozessschritt 21 als Start befindet sich ein Stückgut 4, 5, 6 vor der Ausschleusereinheit 20. In einem beispielhaften zweiten Prozessschritt 22 wird eine Ausschleuseroperationsgeschwindigkeit bestimmt. Es wird in einem beispielhaften dritten Prozessschritt 23 ein Zähler für das zu empfangende Stückgut 4, 5, 6 hochgestellt. In einem beispielhaften vierten Prozessschritt 24 ist die Ausschleusereinheit 20 bereit, ein nächstes Stückgut 4, 5, 6 zu empfangen.

In einem beispielhaften fünften Prozessschritt 25 wird die Vorderkante des einkommenden Stückguts 4, 5, 6 am Eingang der Ausschleusereinheit 20 erfasst, wobei ein fester Eintrittszeitpunkt ermittelt wird. In einem beispielhaften sechsten Prozessschritt 26 werden eingespeicherte Daten vom vorherigen Stückgut gelesen. Aus diesen Daten und dem gemessenen Zeitpunkt und der Geschwindigkeit der Ausschleusereinheit 20 wird dann in einem siebten Prozessschritt 27 der Abstand zwischen diesem Stückgut 4, 5, 6 und einem vorherigen Stückgut ermittelt. Ferner kann in einem achten Prozessschritt 28 die hintere Kante des Stückguts 4, 5, 6 erfasst werden. Daraus kann in einem beispielhaften neunten Prozessschritt 29 die Länge des Stückguts 4, 5, 6 ermittelt werden.

In einem beispielhaften zehnten Prozessschritt 30 kann geprüft werden, ob der Abstand zwischen den aufeinanderfolgenden Stückgütern 4, 5, 6 kleiner als ein vorgegebener minimaler Abstand ist oder ob die Länge des Stückguts 4, 5, 6 größer als eine vorgegebene maximale Länge ist. Wenn wenigstens eines der beiden Abfragen erfüllt ist, kann das Stückgut 4, 5, 6 in einem zwölften Prozessschritt 32 zum Ausgang auf der Fördereinheit 2 bleibend befördert werden. Das Stückgut 4, 5, 6 wird demnach dann nicht ausgeschleust.

Falls keine Bedingung zutrifft, d.h. der jeweilige Abstand ist größer als der vorgegebene minimale Abstand und die Länge kleiner als die maximale Länge, dann kann beispielhaft in einem beispielhaften elften Prozessschritt 31 geprüft werden, ob die Einschusseinheit die Freigabe erteilt. Ist dies nicht der Fall, kann in das Stückgut 4, 5, 6 ebenfalls in dem beispielhaften zwölften Prozessschritt 32 zum Ausgang auf der Fördereinheit 2 bleibend befördert werden.

Ist die Freigabe erteilt, wird in einem sechzehnten Prozessschritt 36 der Abstand zwischen dem letzten ausgeschleusten Stückgut 4, 5, 6 und dem vorliegenden Stückgut 4, 5, 6 gemessen und in einem siebzehnten Prozessschritt 37 in einem größer als ein Mindestabstand ist. Ist dies nicht der Fall, so wird das Stückgut 4, 5, 6 ebenfalls in einem zwölften Prozessschritt 32 zum Ausgang in Richtung der Fördereinheit 2 bleibend gesendet.

Das zum Ausgang in Richtung der Fördereinheit 2 bleibend beförderte Stückgut 4, 5, 6 wird dann in einem beispielhaften dreizehnten Prozessschritt 33 die Vorderkante dieses Stückguts 4, 5, 6 detektiert und in einem beispielhaften vierzehnten Prozessschritt 34 auf einen Deskriptor geschrieben. In einem beispielhaften fünfzehnten Prozessschritt 35 kann dann eine Ausgabe erfolgen, dass das Stückgut 4, 5, 6 an der Ausschleusereinheit 20 entlang auf der Fördereinheit 2 verbleibend vorbeigeführt wurde.

In dem Falle, dass das Stückgut 4, 5, 6 genügend beabstandet ist vom vorherigen ausgeschleusten Stückgut 4, 5, 6, wird die Ausschleusereinheit 20 in einem beispielhaften achtzehnten Prozessschritt 38 aktiviert. In einem beispielhaften neunzehnten Prozessschritt 39 kann dann das ausgeschleuste Stückgut aufgezeichnet und dessen Eintrittszeit erfasst werden.

Die Ausschleusereinheit 20 kann dann nach einem beispielhaften zwanzigsten Prozessschritt 40 beispielhaft rotieren, so dass das ausgewählte Stückgut in Richtung der Zuführungseinheit ausgeschleust werden kann.

In einem beispielhaften einundzwanzigsten Prozessschritt 41 kann die Vorderkante des Stückguts 4, 5, 6 am Ausgang erfasst werden. In einem beispielhaften zweiundzwanzigsten Prozessschritt 42 kann eine Datenausgabe erfolgen. In einem beispielhaften dreiundzwanzigsten Prozessschritt 43 kann die Hinterkante am Ausgang der Ausschleusereinheit 20 erfasst. In einem vierundzwanzigsten Prozessschritt 44 wird dann die Ausschleusereinheit 20 wieder deaktiviert bzw. in Grundstellung gebracht. Als fünfundzwanzigster Prozessschritt 45 beendet damit, dass das Stückgut 4, 5, 6 sich auf der Übertragungseinheit 15 befindet.

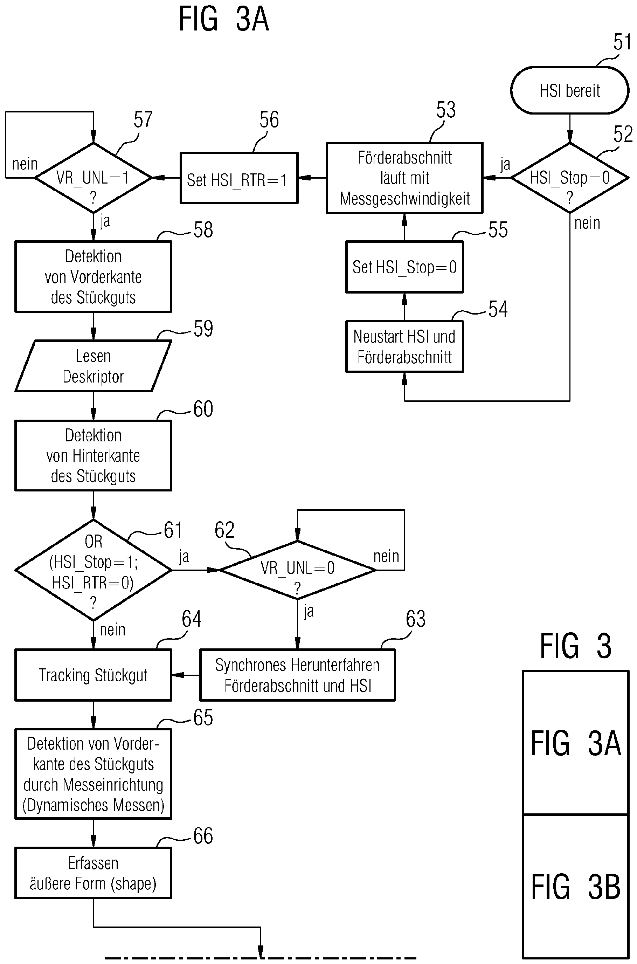

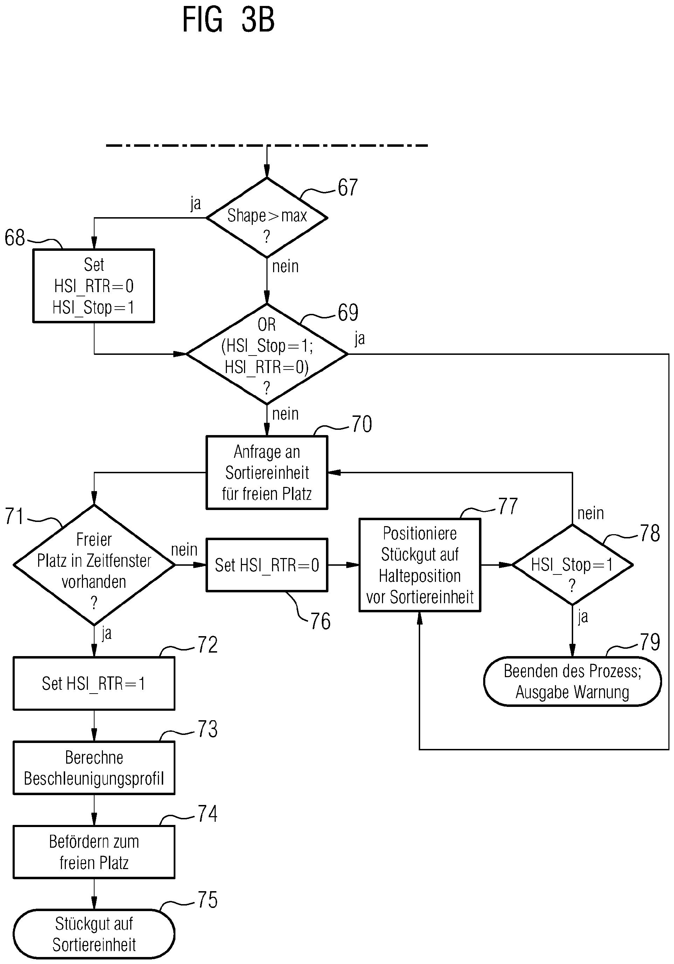

Figur 3 zeigt einen beispielhaften Programmablaufplan einer Einschusseinheit 50 nach einer beispielhaften Ausführungsform. Der sehr detaillierte rein beispielhafte Programmablaufplan wird im Folgenden beschrieben.

In einem beispielhaften ersten Prozessschritt 51 wird die Einschusseinheit 50 gestartet. In einem beispielhaften zweiten Prozessschritt 52 kann geprüft werden, dass kein Stopp der Einschusseinheit 50 vorliegt. Wenn kein Stopp vorliegt, kann in einem dritten beispielhaften Prozessschritt 53 eine mittlere Geschwindigkeit eines Förderabschnitts 16 gesetzt.

Wenn ein Stopp vorliegt, dann kann die Einschusseinheit 50 und der Förderabschnitt 16 in einem beispielhaften vierten Prozessschritt 54 neu gestartet, wobei der Stopp dann in einem beispielhaften fünften Prozessschritt 55 aufgehoben wird.

In einem beispielhaften sechsten Prozessschritt 56 wird die Einschusseinheit 50 bereit gemacht. In einem beispielhaften siebten Prozessschritt 57 wird geprüft, ob die Ausschleusereinheit 20 aktiv ist, d.h. ob eine Stückgut 4, 5, 6 gerade von der Ausschleusereinheit 20 ausgeschleust wird. Falls nein, wird diese Abfrage wiederholt.

Falls ja, wird die Vorderkante des Stückguts 4, 5, 6 in einem beispielhaften achten Prozessschritt 58 detektiert. In einem beispielhaften neunten Prozessschritt 59 werden Daten ausgelesen. In einem beispielhaften zehnten Prozessschritt 60 kann die Hinterkante des Stückguts 4, 5, 6 detektiert werden.

In einem beispielhaften elften Prozessschritt 61 kann geprüft werden, ob ein Stopp der Einschusseinheit 50 vorliegt oder ob die Einschusseinheit 50 nicht bereit ist. Wenn weder noch der Fall ist, dann kann in einem beispielhaften vierzehnten Prozessschritt 64 das Stückgut 4, 5, 6 auf dem Förderabschnitt 16 getrackt werden.

Wenn eins von beiden der Fall ist, dann kann bevorzugt in einem zwölften Prozessschritt 62 geprüft werden, ob die Ausschleusereinheit 20 deaktiviert ist. Wenn nicht, dann kann das erneut geprüft werden. Dann wird hierbei in einem beispielhaften dreizehnten Schleuserschritt 63 die Fördergeschwindigkeit des Förderabschnitts 16 sowie des ersten Elements der Einschusseinheit 50 synchron reduziert, wobei dann auch in dem beispielhaften vierzehnten Prozessschritt 64 das Stückgut 4, 5, 6 auf dem Förderabschnitt 16 nachverfolgt oder in anderen Worten getrackt werden kann. Die restlichen Elemente der Einschusseinheit 50 können im Sinne des dargestellten Prozesses nach Bedarf systematisch angesteuert werden.

In einem beispielhaften fünfzehnten Prozessschritt 65 kann in einem dynamischen Messen mittels einer Messeinrichtung 17, im Besonderen eines Messzeitgitters, das Stückgut 4, 5, 6 vermessen werden. Ebenfalls kann hierbei das verlangsamte Stückgut 4, 5, 6 bzw. ein sich in Geschwindigkeit veränderndes Stückgut 4, 5, 6 auf Grund des dynamischen Messens vermessen werden.

In einem beispielhaften sechzehnten Prozessschritt 66 kann auch das äußere Format bzw. die äußere Form vermessen werden. In einem beispielhaften siebzehnten Prozessschritt 67 kann ferner geprüft werden, ob die Größe über eine vorgegebene Maximalgröße hinausgeht. Im Falle, dass diese Größe nicht übertroffen wird, kann das übergroße Stückgut 4, 5, 6 kann nun wiederholt in einem beispielhaften neunzehnten Prozessschritt 69 geprüft werden, ob die Einschusseinheit 50 nicht bereit ist oder ein Stopp vorliegt. Falls weder noch der Fall ist, d.h. die Einschusseinheit 50 ist bereit, so kann eine Anfrage nach einem freien Platz auf der Sortiereinheit 10 in einem beispielhaften zwanzigsten Prozessschritt 70 erfolgen. In einem beispielhaften einundzwanzigsten Prozessschritt 71 kann dann geprüft werden, ob der freie Platz in dem verfügbaren Zeitfenster erreichbar ist. Falls ja, kann in einem zweiundzwanzigsten Schritt 72 die Einschusseinheit 50 aktiviert und in einem beispielhaften dreiundzwanzigsten Schritt 73 ein individuelles Beschleunigungsprofil bestimmt werden. Dann kann in einem beispielhaften vierundzwanzigsten Prozessschritt 74 das Stückgut 4, 5, 6 in den angedachten freien Platz induziert bzw. eingeschossen werden. In einem beispielhaften fünfundzwanzigsten Prozessschritt 75 ist dann das Stückgut 4, 5, 6 in seinem vorliegenden Platz der Sortiereinheit 10.

Im Falle, dass in dem beispielhaften einundzwanzigsten Prozessschritt 70 kein in einem bestimmten Zeitfenster erreichbarer freier Platz vorliegt, kann die Einschusseinheit 50 in einem beispielhaften sechsundzwanzigsten Prozessschritt 76 deaktiviert werden und in einem beispielhaften siebenundzwanzigsten Prozessschritt 77 das Stückgut 4, 5, 6 auf einem Halteposition 18, 19 vor der Sortiereinheit 10 platziert werden.

Auch im Falle des beispielhaften siebzehnten Prozessschritts 67, wenn ein Stückgut 4, 5, 6 als übergroß erkannt wird, kann dieses über einen beispielhaften achtzehnten Prozessschritt 68 und einen neunzehnten Prozessschritt 69 an einer solchen Halteposition 18, 19 vor der Sortiereinheit 10 positioniert werden. In einem beispielhaften achtundzwanzigsten Prozessschritt 78 kann dann geprüft werden, ob ein solches übergroßes Stückgut 4, 5, 6 sich auf einem der Halteposition 18, 19 befindet.

Wenn das der Fall ist, dann kann der Prozess mit einer Warnung in einem beispielhaften neunundzwanzigsten Prozessschritt 79 beendet werden. Hier kann das System vor Schädigungen bewahrt werden. Es ist damit eine Sicherheit eingebaut. In dem anderen Fall, dass kein solches übergroßes Stückgut 4, 5, 6 sich auf einer der Haltepositionen 18, 19 befindet, kann für ein solches oder auch für mehrere solcher Stückgüter 4, 5, 6 eine nach dem beispielhaften zwanzigsten Prozessschritt 70 erfolgte Anfrage an die Sortiereinheit 10 erfolgen, welche im Falle einer Bejahung zu einer den jeweiligen zu erreichenden freien Platz mittels der Einschusseinheit 50 gelangt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den in den Ansprüchen definierten Schutzumfang der Erfindung zu verlassen.

### Bezugszeichenliste

- 1: Übertragungsvorrichtung
- 2: Fördereinheit
- 4: Stückgut
- 5: Stückgut
- 6: Stückgut
- 7: Messeinheit
- 10: Sortiereinheit
- 14: Bänder
- 15: Übertragungseinheit
- 16: Förderabschnitt
- 17: Messeinrichtung
- 18: Halteposition
- 19: Halteposition

- α: Winkel

- 20: Ausschleusereinheit

- 21: erster Prozessschritt
- 22: zweiter Prozessschritt
- 23: dritter Prozessschritt
- 24: vierter Prozessschritt
- 25: fünfter Prozessschritt
- 26: sechster Prozessschritt
- 27: siebter Prozessschritt
- 28: achter Prozessschritt
- 29: neunter Prozessschritt
- 30: zehnter Prozessschritt
- 31: elfter Prozessschritt
- 32: zwölfter Prozessschritt
- 33: dreizehnter Prozessschritt
- 34: vierzehnter Prozessschritt
- 35: fünfzehnter Prozessschritt
- 36: sechzehnter Prozessschritt
- 37: siebzehnter Prozessschritt
- 38: achtzehnter Prozessschritt
- 39: neunzehnter Prozessschritt
- 40: zwanzigster Prozessschritt
- 41: einundzwanzigster Prozessschritt
- 42: zweiundzwanzigster Prozessschritt
- 43: dreiundzwanzigster Prozessschritt
- 44: vierundzwanzigster Prozessschritt
- 45: fünfundzwanzigster Prozessschritt

- 50: Einschusseinheit

- 51: erster Prozessschritt
- 52: zweiter Prozessschritt
- 53: dritter Prozessschritt
- 54: vierter Prozessschritt
- 55: fünfter Prozessschritt
- 56: sechster Prozessschritt
- 57: siebter Prozessschritt
- 58: achter Prozessschritt
- 59: neunter Prozessschritt
- 60: zehnter Prozessschritt
- 61: elfter Prozessschritt
- 62: zwölfter Prozessschritt
- 63: dreizehnter Prozessschritt
- 64: vierzehnter Prozessschritt
- 65: fünfzehnter Prozessschritt
- 66: sechzehnter Prozessschritt
- 67: siebzehnter Prozessschritt
- 68: achtzehnter Prozessschritt
- 69: neunzehnter Prozessschritt
- 70: zwanzigster Prozessschritt
- 71: einundzwanzigster Prozessschritt
- 72: zweiundzwanzigster Prozessschritt
- 73: dreiundzwanzigster Prozessschritt
- 74: vierundzwanzigster Prozessschritt
- 75: fünfundzwanzigster Prozessschritt
- 76: sechsundzwanzigster Prozessschritt
- 77: siebenundzwanzigster Prozessschritt
- 78: achtundzwanzigster Prozessschritt
- 79: neunundzwanzigster Prozessschritt

## Patentansprüche

1. Übertragungsvorrichtung (1) zur Übertragung von Stückgütern (4, 5, 6), umfassend:
- eine Fördereinheit (2) zum Fördern von Stückgütern (4, 5, 6);
- eine Sortiereinheit (10), welche zum Einsortieren von Stückgütern (4, 5, 6) aus der Fördereinheit (2) ausgebildet ist;
- eine Übertragungseinheit (15), welche eine Transportverbindung zwischen der Fördereinheit (2) und der Sortiereinheit (10) ausbildet;
- wobei die Übertragungseinheit (15) eine Einschusseinheit (50) umfasst, welche dazu ausgebildet ist, die Stückgüter (4, 5, 6) auf einen für das Stückgut (4, 5, 6) ermittelten freien Platz der Sortiereinheit (10) zu befördern;
**gekennzeichnet durch**
- eine Ausschleusereinheit (20), welche auf einem Abschnitt der Fördereinheit (2) positioniert ist und dazu ausgebildet ist, ein Stückgut (4, 5, 6) nur dann auf die Übertragungseinheit (15) auszuschleusen, wenn dieses Stückgut (4, 5, 6) einen vordefinierten Mindestabstand zu einem zuvor ausgeschleusten Stückgut (4, 5, 6) aufweist.

2. Übertragungsvorrichtung (1) nach Anspruch 1, wobei die Ausschleusereinheit (20) dazu ausgebildet ist, nur diejenigen Stückgüter (4, 5, 6) in die Übertragungseinheit (15) auszuschleusen, welche eine bestimmte Größe nicht überschreiten.

3. Übertragungsvorrichtung (1) nach einem der vorherigen Ansprüche, wobei die Ausschleusereinheit (20) dazu ausgebildet ist, nur dann Stückgüter (4, 5, 6) auf die Übertragungseinheit (15) auszuschleusen, wenn die Einschusseinheit (50) dazu eine Freigabe erteilt hat.

4. Übertragungsvorrichtung (1) nach Anspruch 3, wobei die Ausschleusereinheit (20) dazu ausgebildet ist, keine Stückgüter (4, 5, 6) in die Übertragungseinheit (15) auszuschleusen, wenn für ein Stückgut (4, 5, 6) von der Einschusseinheit (50) kein freier Platz auf der Sortiereinheit (10) zugewiesen werden kann.

5. Übertragungsvorrichtung (1) nach einem der vorherigen Ansprüche, wobei die Einschusseinheit (50) derart ausgebildet ist, dass ein Stückgut (4, 5, 6), für welches kein freier Platz auf der Sortiereinheit (10) zugewiesen werden kann, auf einer definierten Halteposition (18, 19) auf der Einschusseinheit (50) vor der Sortiereinheit (10) positioniert wird.

6. Übertragungsvorrichtung nach Anspruch 5, wobei die Einschusseinheit (50) derart ausgebildet ist, dass ein auf der Einschusseinheit (50) positioniertes Stückgut mittels der Einschusseinheit (50) bei Erreichbarkeit eines freien Platzes auf diesen befördert wird.

7. Übertragungsvorrichtung (1) nach einem der vorherigen Ansprüche, wobei die Einschusseinheit (50) eine Messeinrichtung (17) umfasst, welche dazu ausgebildet ist, die Größe und Position des Stückguts (4, 5, 6) bei sich verändernden Geschwindigkeiten zu vermessen.

8. Übertragungsvorrichtung (1) nach einem der vorherigen Ansprüche, wobei die Übertragungseinheit (15) mit der Sortiereinheit (10) einen Winkel (α) von weniger als 70°, bevorzugt weniger als 55°, noch bevorzugter weniger als 40° aufweist.

9. Verfahren zur Übertragung von Stückgütern (4, 5, 6), umfassend die Schritte:
- Bereitstellen einer Fördereinheit (2) zum Fördern von Stückgütern (4, 5, 6);
- Bereitstellen einer Sortiereinheit (10), welche zum Einsortieren von Stückgütern (4, 5, 6) aus der Fördereinheit (2) ausgebildet ist;
- Bereitstellen einer Übertragungseinheit (15), welche eine Transportverbindung zwischen der Fördereinheit (2) und der Sortiereinheit (10) ausbildet;
- Bereitstellen einer Einschusseinheit (50), welche dazu ausgebildet ist, die Stückgüter (4, 5, 6) auf einen für das Stückgut (4, 5, 6) ermittelten freien Platz der Sortiereinheit (10) zu befördern;
- Fördern von Stückgütern (4, 5, 6) entlang der Fördereinheit (2);
- Ermitteln eines freien Platzes für ein ausgeschleustes Stückgut (4, 5, 6) auf der Sortiereinheit (10) und Befördern des Stückguts (4, 5, 6) mittels der Einschusseinheit (20) auf den ermittelten freien Platz;
**gekennzeichnet durch** den Schritt:
- Ausschleusen von ausgewählten Stückgütern (4, 5, 6) mittels einer Ausschleusereinheit (20) in die Übertragungseinheit (15), wobei die Ausschleusereinheit (20) auf einem Abschnitt der Fördereinheit (2) positioniert ist und dazu ausgebildet ist, nur solche Stückgüter (4, 5, 6) auf die Übertragungseinheit (15) auszuschleusen, welche eine bestimmte Bedingung erfüllen.

## Claims

1. Transfer apparatus (1) for transferring articles (4, 5, 6), comprising:
- a conveying unit (2) for conveying articles (4, 5, 6);
- a sorting unit (10), which is designed for sorting articles (4, 5, 6) from the conveying unit (2);
- a transfer unit (15), which forms a transporting connection between the conveying unit (2) and the sorting unit (10);
- wherein the transfer unit (15) comprises a feeding unit (50), which is designed to convey the articles (4, 5, 6) onto a free space of the sorting unit (10) determined for the article (4, 5, 6);
**characterised by**
- a discharging unit (20), which is positioned on a portion of the conveying unit (2) and is designed to discharge an article (4, 5, 6) onto the transfer unit (15) only when said article (4, 5, 6) is at a predefined minimum distance from a previously discharged article (4, 5, 6).

2. Transfer apparatus (1) according to claim 1, wherein the discharging unit (20) is designed to discharge into the transfer unit (15) only those articles (4, 5, 6) which do not exceed a certain size.

3. Transfer apparatus (1) according to one of the preceding claims, wherein the discharging unit (20) is designed to discharge articles (4, 5, 6) onto the transfer unit (15) only when the feeding unit (50) has issued a release to this effect.

4. Transfer apparatus (1) according to claim 3, wherein the discharging unit (20) is designed not to discharge any articles (4, 5, 6) into the transfer unit (15) if no free space on the sorting unit (10) can be assigned by the feeding unit (50) for an article (4, 5, 6).

5. Transfer apparatus (1) according to one of the preceding claims, wherein the feeding unit (50) is designed in such a way that an article (4, 5, 6) for which no free space can be assigned on the sorting unit (10) is positioned on a defined holding position (18, 19) on the feeding unit (50) upstream of the sorting unit (10).

6. Transfer apparatus according to claim 5, wherein the feeding unit (50) is designed in such a way that, if a free space is reachable, an article positioned on the feeding unit (50) is conveyed onto this by means of the feeding unit (50).

7. Transfer apparatus (1) according to one of the preceding claims, wherein the feeding unit (50) comprises a measurement device (17), which is designed to measure the size and position of the article (4, 5, 6) at varying speeds.

8. Transfer apparatus (1) according to one of the preceding claims, wherein the transfer unit (15) has an angle (α) of less than 70°, preferably less than 55°, more preferably less than 40° with the sorting unit (10).

9. Method for transferring articles (4, 5, 6), comprising the steps:
- providing a conveying unit (2) for conveying articles (4, 5, 6);
- providing a sorting unit (10), which is designed for sorting articles (4, 5, 6) from the conveying unit (2);
- providing a transfer unit (15), which forms a transporting connection between the conveying unit (2) and the sorting unit (10);
- providing a feeding unit (50), which is designed to convey the articles (4, 5, 6) onto a free space of the sorting unit (10) determined for the article (4, 5, 6);
- conveying articles (4, 5, 6) along the conveying unit (2) ;
- determining a free space on the sorting unit (10) for a discharged article (4, 5, 6) and conveying the article (4, 5, 6) by means of the feeding unit (20) onto the free space determined;
**characterised by** the step:
- discharging selected articles (4, 5, 6) by means of a discharging unit (20) into the transfer unit (15), wherein the discharging unit (20) is positioned on a portion of the conveying unit (2) and is designed to discharge onto the transfer unit (15) only those articles (4, 5, 6) which fulfil a certain condition.

## Revendications

1. Dispositif de transfert (1) destiné au transfert de marchandises de détail (4, 5, 6), comprenant :
- une unité de transport (2) pour transporter des marchandises de détail (4, 5, 6) ;
- une unité de triage (10) qui est conçue pour ranger des marchandises de détail (4, 5, 6) venant de l'unité de transport (2) ;
- une unité de transfert (15) qui est forme une liaison de transport entre l'unité de transport (2) et l'unité de triage (10) ;
- l'unité de transfert (15) comprenant une unité d'introduction (50) qui est conçue pour transporter les marchandises de détail (4, 5, 6) vers une place de l'unité de triage (10) libre déterminée pour la marchandise de détail (4, 5, 6) ;
**caractérisé par**
- une unité d'évacuation (20) qui est positionnée sur une partie de l'unité de transport (2) et qui est conçue pour n'évacuer une marchandise de détail (4, 5, 6) vers l'unité de transfert (15) que si cette marchandise de détail (4, 5, 6) est à une distance minimale prédéfinie d'une marchandise de détail (4, 5, 6) préalablement évacuée.

2. Dispositif de transfert (1) selon la revendication 1, l'unité d'évacuation (20) étant conçue pour n'évacuer vers l'unité de transfert (15) que les marchandises de détail (4, 5, 6) qui ne dépassent pas une taille déterminée.

3. Dispositif de transfert (1) selon l'une des revendications précédentes, l'unité d'évacuation (20) étant conçue pour n'évacuer des marchandises de détail (4, 5, 6) vers l'unité de transfert (15) que si l'unité d'introduction (50) a délivré une autorisation correspondante.

4. Dispositif de transfert (1) selon la revendication 3, l'unité d'évacuation (20) étant conçue pour ne pas évacuer des marchandises de détail (4, 5, 6) vers l'unité de transfert (15) si aucune place libre sur l'unité de triage (10) ne peut être affectée par l'unité d'introduction (50) pour une marchandise de détail (4, 5, 6).

5. Dispositif de transfert (1) selon l'une des revendications précédentes, l'unité d'introduction (50) étant conçue pour qu'une marchandise de détail (4, 5, 6) pour laquelle ne peut être affectée aucune place libre sur l'unité de triage (10) soit positionnée à une position de maintien définie (18, 19) sur l'unité d'introduction (50) devant l'unité de triage (10).

6. Dispositif de transfert selon la revendication 5, l'unité d'introduction (50) étant conçue pour qu'une marchandise de détail positionnée sur l'unité d'introduction (50) soit, lorsqu'une place libre peut être atteinte, transportée au moyen de l'unité d'introduction (50) vers celle-ci.

7. Dispositif de transfert (1) selon l'une des revendications précédentes, l'unité d'introduction (50) comprenant un dispositif de mesure (17) qui est conçu pour mesurer la taille et la position de la marchandise de détails (4, 5, 6) à des vitesses variables.

8. Dispositif de transfert (1) selon l'une des revendications précédentes, l'unité de transfert (15) formant avec l'unité de triage (10) un angle (a) de moins de 70°, préférentiellement de moins de 55°, et plus préférentiellement encore de moins de 40°.

9. Procédé de transfert de marchandises de détail (4, 5, 6), comportant les étapes :
- mise à disposition d'une unité de transport (2) pour transporter des marchandises de détail (4, 5, 6) ;
- mise à disposition d'une unité de triage (10) qui est conçue pour ranger des marchandises de détail (4, 5, 6) venant de l'unité de transport (2) ;
- mise à disposition d'une unité de transfert (15) qui forme une liaison de transport entre l'unité de transport (2) et l'unité de triage (10) ;
- mise à disposition d'une unité d'introduction (50) qui est conçue pour transporter les marchandises de détail (4, 5, 6) vers une place de l'unité de triage (10) libre déterminée pour la marchandise de détail (4, 5, 6) ;
- transport de marchandises de détail (4, 5, 6) le long de l'unité de transport (2) ;
- détermination d'une place libre pour une marchandise de détail évacuée (4, 5, 6) sur l'unité de triage (10) et transport de la marchandise de détail (4, 5, 6) au moyen de l'unité d'introduction (20) vers la place libre déterminée ;
**caractérisé par** l'étape :
- évacuation de marchandises de détail sélectionnées (4, 5, 6) au moyen d'une unité d'évacuation (20) vers l'unité de transfert (15), l'unité d'évacuation (20) étant positionnée sur une partie de l'unité de transport (2) et étant conçue pour n'évacuer vers l'unité de transfert (15) que des marchandises de détail (4, 5, 6) qui remplissent une condition déterminée.
